# EUROPÄISCHE PATENTSCHRIFT

(11) **EP 0 450 371 B1**
(45) Veröffentlichungstag und Bekanntmachung des Hinweises auf die Patenterteilung: **03.02.1999**
(21) Anmeldenummer: 91104076.4
(22) Anmeldetag: 15.03.1991
(51) Int. Cl.: G06F 9/44

(54) **Verfahren zum Programmieren von Automatisierungsvorgängen mit einem Programmiergerät auf Rechnerbasis**
Automation process programming method with computer-based programming device
Procédé de programmation de processus avec dispositif de programmation à base d'ordinateur

(30) Priorität: 02.04.1990 DE 4010571
(43) Veröffentlichungstag der Anmeldung: 09.10.1991
(73) Patentinhaber: SIEMENS AKTIENGESELLSCHAFT, 80333 München (DE)
(72) Erfinder: Stripf, Wolfgang, Dr., W-7500 Karlsruhe 21 (DE); Brich, Peter, Dipl.-Ing. (FH), W-8522 Herzogenaurach (DE)

(56) Entgegenhaltungen:
- COMPUTER. Bd. 21, Nr. 11, November 1988, NEW YORK US Seiten 11 - 24 C.RICH ET AL. 'The Programmers's Apprentice : A research overview'
- PROCEEDINGS OF THE SPIE CONFERENCE Bd. 1095, M rz 1989, ORLANDO, FLA Seiten 357 - 359 J.DARVISH ET AL. 'PORTABLE COMPUTER BASED DIAGNOSTIC AND MAINTENANCE SYSTEMS'
- CD-ROM LIBRARIAN Bd. 5, Nr. 2, Februar 1990, BETHELEM, PA Seiten 42 - 45 SANTOS-DEVRIES 'Microsoft Programmer's Library Version 1.1'
- UND ODER NOR + STEUERUNGSTECHNIK Bd. 19, Nr. 4, April 1989, MAINZ Seiten 61 - 62 B.VETTER 'Das neue Bosch PG4-Programmieren ohne Handbuch'

## Beschreibung

Die Erfindung bezieht sich auf ein Verfahren zum Programmieren von Automatisierungsvorgängen mit einem Programmiergerät auf Rechnerbasis, welches Speicher für Programmiersoftware enthält und im Multi-Tasking-Betrieb arbeitsfähig ist.

In zunehmendem Maße werden zum Programmieren von Steuerungsgeräten, z.B. auf Simatic S 5-Basis Programmiergeräte benutzt, welche erhebliche Unterstützung beim Programmieren bieten. Im derzeitigen Zeitpunkt werden einerseits die Anlage- und Projekte in der Automatisierungstechnik immer komplexer, andererseits gewinnen aber die bei Software im Automatisierungsgerät zur Verfügung stehenden Projektierungswerkzeuge immer mehr an Leistungsfähigkeit hinzu. Dies gilt sowohl für die Verarbeitungsgeschwindigkeit als auch für die Speicherkapazität und für die Fähigkeit, mehrere Programme gleichzeitig zu bearbeiten.

Heute schon ist im Regelfall ein Standardprojektierungsgerät, welches im Zusammenhang mit Simatic-Steuerungsgeräten benutzt wird, mit einem Dienst-Programm versehen, wie z.B. STEP 5 Funktionsplanprogrammierung, das es erlaubt, die entsprechenden Funktionspläne für eine Steuerung auf einfache Weise zu gestalten. Dieses Dienstprogramm ist in einer Harddisc gespeichert und bildet ein sehr leistungsfähiges Werkzeug für den Programmierer. Aber das beste Werkzeug genügt nicht, wenn der Anwender- sprich Programmierer - es wegen fehlender Routine oder fehlendem Expertenwissen nicht optimal einsetzen kann.

Das Dokument : UND ODER NOR + STEUERUNGSTECHNIK, Bd. 19, Nr. 4, April 1989, MAINZ Seiten 61-62; B. VETTER. 'Das neue Bosch PG4-Programmieren ohne Handbuch', beschreibt ein Programmiergerät für Speicherprogrammierbare Steuerungen, in dem der Anwender durch die verschiedenen Funktionen des PG4s im Dialog geführt wird.

Die Aufgabe der vorliegenden Erfindung besteht darin, das fehlende Wissen der Anwender auszugleichen, d.h. die Leistungsfähigkeit der vorliegenden Programmiersoftwerkzeuge weiter zu verbessern und die Handhabung zu vereinfachen.

Diese Aufgabe wird erfindungsgemäß durch folgende Merkmale gelöst:
a) zusätzlich zur gespeicherten Programmiersoftware ist Expertenwissen auf einem dem Programmiergerät zugänglichen Speicher niedergelegt und
b) zur Aktivierung des Expertenwissens ist eine bedienerseitig am Programmiergerät aktivierbare Hardwareeingabe vorgesehen, über die mittels eines gespeicherten Retrieval-Systems die zur Programmierung zusätzlich erforderliche Information des Expertenwissens auffindbar ist.

Das zusätzliche Expertenwissen, z.B. in Form von Bedienungsanleitungen, kann auf einem CD-ROM Speicher niedergelegt sein, der entsprechend durch die Hardwareeingabe aktiviert werden kann.

Der vorliegend geschilderten Idee kommen insbesondere die neuen Programmiergeräte entgegen, die mit Hilfe des mitgelieferten Betriebssystems einen sogenannten Multi-tasking-Betrieb SS-DOS/HT möglich machen. Die vom Anwender gewählte Applikationssoftware, wie z.B. Step 5, kann parallel mit weiteren Applikationsprogrammen, die einen Zugriff auf Expertenwissen möglich machen, bei trieben werden.

Das Expertenwissen kann in Form von:
Betriebsanleitungen, Gerätehandbüchern, usw.
Lernprogrammen,
Sammlung von Standard-Software-Funktionsbausteinen mit Beschreibung und Anwendungshinweisen,
Katalogdaten und/oder Technologie und tätigkeitsspezifischem Wissen, wie z.B. in Lernprogrammen niedergelegt, vorliegen.

Zur Aktivierung des Expertenwissens ist vorteilhafterweise eine Hardware-Einrichtung, z.B. eine Art Hilfetaster, vorzusehen. In einem ersten Schritt können die Betriebsanleitung und gegebenenfalls die Selbstlern- oder Weiterbildungsunterlagen dem Anwender auf einem CD-ROM als Hilfe angeboten werden. Diese Daten werden zusätzlich zur Projektierungssoftware bei Bedarf aufgerufen.

Die Betriebsanleitung ist hier mit einem Retrieval-System so aufbereitet, daß nach beliebigen Textstellen gesucht und die gewünschte Information relativ schnell wieder findbar ist. Die Programmiergerät-Hardware und das Betriebssystem werden so ergänzt, daß bei Auftreten eines Bedienungsfehlers und einer Wissenslücke des Anwenders durch Drücken der Hilfetaste direkt in ein Retrieval-System verzweigt werden kann und hiermit für die weitere Arbeit das Expertenwissen nutzbar ist.

Fehlermeldungen aus den verschiedenen Projektierungspaketen können direkt ins Retrieval-System übernommen werden. Die Suche nach weiterführenden Informationen aus der Betriebsanleitung geht somit deutlich schneller als nach der konventionalen Methode. Auch kann durch ein solches System auf eine wesentlich größere Informationsmenge zugegriffen werden und die notwendigen Daten können dem Nutzer direkt angezeigt werden. Nach Informationsaufnahme wird automatisch wieder in die Applikation projektierend zurückverzweigt, ohne daß der Anwender mit dem Aufruf bzw. Beenden von Programmen belastet wird. Durch diese Lösung ist die Einsetzbarkeit und die Einsatzschwelle der Projektierungssysteme weiter abgesenkt, ohne daß hohe Aufwendungen für Weiterbildungsmaßnahmen des Personals erforderlich sind.

Die Verbindung einer Softwareapplikation in diesem Sinne mit einem Retrieval-System mittels einer Hardwareeinrichtung ist noch erweiterungsfähig, z.B. durch den Einbau von Sprache, Bewegtbildern usw. in die Wissensbasen.

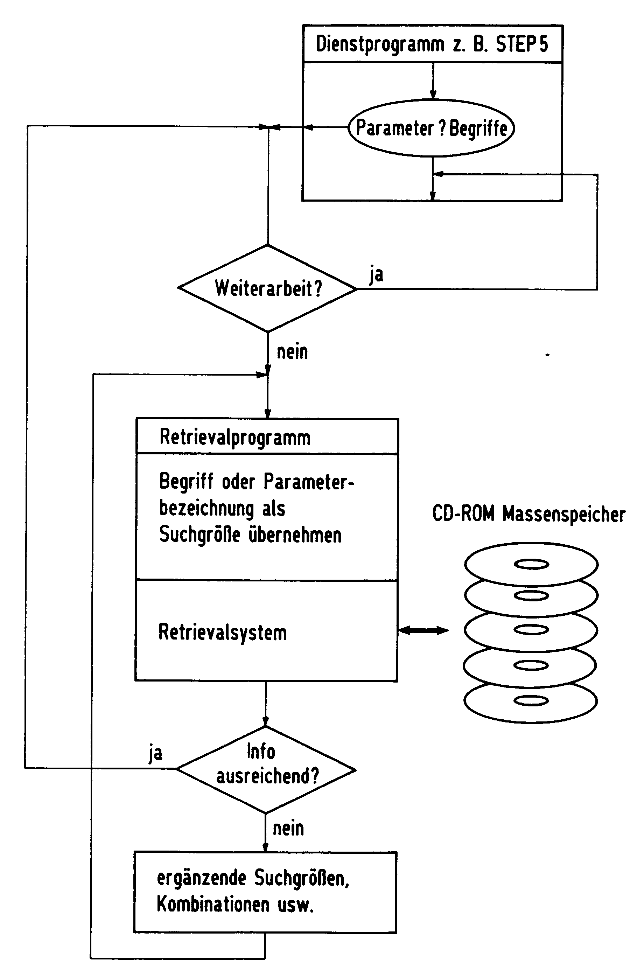

Der Ablauf der genannten Funktionen in einer Programmiersitzung ist aus der Zeichnung ersichtlich, die aus sich heraus verständlich ist.

## Patentansprüche

1. Verfahren zum Programmieren von Automatisierungsvorgängen bei programmierbaren industriellen Steuerungen mit einem Programmiergerät auf Rechnerbasis, **dadurch gekennzeichnet**, daß
a) zusätzlich zur gespeicherten Programmiersoftware Expertenwissen auf einem dem Programmiergerät zugänglichen Massenspeicher niedergelegt ist und
b) zur Aktivierung des Expertenwissens eine bedienerseitig am Programmiergerät aktivierbare Hardwareeingabe vorgesehen ist, über die mittels eines gespeicherten Retrieval-Systems die zur Programmierung zusätzlich erforderliche Information des Expertenwissens auffindbar ist.

2. Verfahren nach Anspruch 1, **gekennzeichnet durch** auf CD-ROM gespeicherte Informationen, wie z.B. Benutzeranleitungen, Serviceunterlagen, Standard-Software-Lösungen usw., die benutzerseitig aktivierbar sind.

3. Verfahren nach Anspruch 1, **gekennzeichnet durch** einen Multi-tasking-Betrieb des Programmiergerätes hinsichtlich Programmiersoftware und Expertenwissen.

## Claims

1. Method for programming automation processes in the case of programmable industrial controls with a computer-based programming device, characterised in that
a) in addition to the stored programming-software, expert knowledge is stored on a mass storage device that is accessible to the programming device; and
b) provided for the purpose of activating the expert knowledge there is a hardware input that can be activated by the operator at the programming device and by way of which, by means of a stored retrieval system, it is possible to locate the information of the expert knowledge that is additionally required for programming purposes.

2. Method according to claim 1, characterised by information stored on a CD-ROM, such as, for example, user instructions, service documents, standard software solutions and so on, which can be activated by the user.

3. Method according to claim 1, characterised by a multi-tasking operation of the programming device with regard to programming-software and expert knowledge.

## Revendications

1. Procédé de programmation d'opérations d'automatisation dans des commandes programmables industrielles, comportant un dispositif de programmation à base d'ordinateur, caractérisé en ce que
a) en plus du logiciel de programmation enregistré, on consigne un savoir d'expert sur une mémoire de fond accessible au dispositif de programmation, et
b) on prévoit, pour activer le savoir d'expert, une entrée en matériel, qui peut être activée du côté utilisateur sur le dispositif de programmation et par l'intermédiaire de laquelle, au moyen d'un système de récupération enregistré, l'information du savoir d'expert, nécessaire en plus de la programmation, peut être retrouvée.

2. Procédé suivant la revendication 1, caractérisé par des informations enregistrées sur CD-ROM, comme par exemple des instructions à l'utilisateur, des documents de service, des solutions logicielles normalisées, etc., qui peuvent être activées côté utilisateur.

3. Procédé suivant la revendication 1, caractérisé par un fonctionnement multitâches du dispositif de programmation en ce qui concerne le logiciel de programmation et le savoir d'expert.
